(19) **Europäisches Patentamt / European Patent Office / Office européen des brevets**

(11) **EP 4 668 610 A1**

(12) **EUROPEAN PATENT APPLICATION**
published in accordance with Art. 153(4) EPC

(43) Date of publication:
**24.12.2025 Bulletin 2025/52**

(21) Application number: **24757226.6**

(22) Date of filing: **16.02.2024**

(51) International Patent Classification (IPC):
**H04B 7/06** (2006.01)     **H04W 52/02** (2009.01)
**H04W 72/21** (2023.01)     **H04W 52/36** (2009.01)
**H04B 7/08** (2006.01)

(52) Cooperative Patent Classification (CPC):
**H04B 7/06; H04B 7/08; H04W 52/02; H04W 52/36;
H04W 72/21**

(86) International application number:
**PCT/KR2024/002133**

(87) International publication number:
**WO 2024/172504 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023   KR 20230021069
12.05.2023   KR 20230062061
09.08.2023   KR 20230104421**

(71) Applicant: **LG Electronics Inc.
Yeongdeungpo-gu
Seoul 07336 (KR)**

(72) Inventors:
• **MYUNG, Sechang**
  Seoul 06772 (KR)
• **KIM, Seonwook**
  Seoul 06772 (KR)
• **YANG, Suckchel**
  Seoul 06772 (KR)
• **PARK, Haewook**
  Seoul 06772 (KR)
• **CHUNG, Jaehoon**
  Seoul 06772 (KR)

(74) Representative: **Jung, Minkyu
Wuesthoff & Wuesthoff
Patentanwälte und Rechtsanwalt PartG mbB
Schweigerstraße 2
81541 München (DE)**

(54) **METHOD AND APPARATUS FOR TRANSMITTING AND RECEIVING SIGNALS IN WIRELESS COMMUNICATION SYSTEM**

(57)     A method and apparatus for transmitting and receiving signals in a wireless communication system, disclosed in the present specification, omit transmission of a portion of part 2 CSI, according to a priority level. Here, the priority level may be subdivided on the basis of a low-configuration level.

EP 4 668 610 A1

**【FIG. 5】**

Table 5.2.3-1: Priority reporting levels for Part 2 CSI

| Priority 0:<br><br>For CSI reports 1 to $N_{Rep}$, Group 0 CSI for CSI reports configured as 'typeII-r16' or 'typeII-PortSelection-r16'; Part 2 wideband CSI for CSI reports configured otherwise |
| --- |
| Priority 1:<br><br>Group 1 CSI for CSI report 1, if configured as 'typeII-r16' or 'typeII-PortSelection-r16'; Part 2 subband CSI of even subbands for CSI report 1, if configured otherwise |
| Priority 2:<br><br>Group 2 CSI for CSI report 1, if configured as 'typeII-r16' or 'typeII-PortSelection-r16'; Part 2 subband CSI of odd subbands for CSI report 1, if configured otherwise |
| Priority 3:<br><br>Group 1 CSI for CSI report 2, if configured as 'typeII-r16' or 'typeII-PortSelection-r16'; Part 2 subband CSI of even subbands for CSI report 2, if configured otherwise |
| Priority 4:<br><br>Group 2 CSI for CSI report 2, if configured as 'typeII-r16' or 'typeII-PortSelection-r16'. Part 2 subband CSI of odd subbands for CSI report 2, if configured otherwise |

$\bullet$
$\bullet$
$\bullet$

| Priority $2N_{Rep} - 1$:<br><br>Group 1 CSI for CSI report $N_{Rep}$, if configured as 'typeII-r16' or 'typeII-PortSelection-r16'; Part 2 subband CSI of even subbands for CSI report $N_{Rep}$, if configured otherwise |
| --- |
| Priority $2N_{Rep}$:<br><br>Group 2 CSI for CSI report $N_{Rep}$, if configured as 'typeII-r16' or 'typeII-PortSelection-r16'; Part 2 subband CSI of odd subbands for CSI report $N_{Rep}$, if configured otherwise |

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

#### Technical Problem

An object of the present disclosure is to provide a signal transmission and reception method and a device therefor for efficiently transmitting and receiving a reference signal and a measurement report in a wireless communication system.
It will be appreciated by persons skilled in the art that the objects that could be achieved with the present disclosure are not limited to what has been particularly described hereinabove and the above and other objects that the present disclosure could achieve will be more clearly understood from the following detailed description.

#### Technical Solution

The present disclosure provides a method and apparatus for transmitting and receiving a signal in a wireless communication system.
According to an aspect of the present disclosure, a method of transmitting and receiving a signal by a user equipment (UE) in a wireless communication system includes receiving channel state information (CSI) reporting configurations, receiving CSI-reference signals (CSI-RSs) on CSI-RS resources based on the CSI reporting configurations, and transmitting CSI reports based on a measurement result for the CSI-RSs, wherein for the CSI reports, each CSI report includes part 1 CSI and part 2 CSI, and the part 2 CSI includes group 0 CSI, group 1 CSI, and group 2 CSI, different priority levels are determined for the group 0 CSI, the group 1 CSI, and the group 2 CSI, from among the CSI reporting configurations, based on a first CSI reporting configuration including sub-configurations corresponding to a first CSI report including sub-reports, omission of part 2 CSI for the first CSI report is performed at a sub-configuration level within the same priority level, and from among the CSI reporting configurations, based on that a second CSI reporting configuration that does not include sub-configurations corresponds to a second CSI report that does not include sub-reports, omission of part 2 CSI for the second CSI report is performed for all information of a particular priority level.
In another aspect of the present disclosure, there are provided an apparatus, a processor, and a storage medium for performing the signal transmission and reception method.
The apparatus may include an autonomous driving vehicle communicable with at least a UE, a network, and another autonomous driving vehicle other than the communication apparatus.
The above-described aspects of the present disclosure are only some of the preferred embodiments of the present disclosure, and various embodiments reflecting the technical features of the present disclosure may be derived and understood from the following detailed description of the present disclosure by those skilled in the art.

#### Advantageous Effects

According to an embodiment of the present disclosure, when a reference signal and a measurement report are transmitted and received between communication devices, there is an advantage in that more efficient signal transmission and reception may be performed through operations differentiated from the related art.
It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.

FIG. 2 illustrates a resource grid during the duration of a slot.

FIG. 3 illustrates a self-contained slot structure.

FIGS. 4 to 6 are diagrams illustrating methods for transmitting and receiving a signal according to the embodiments of the present disclosure.

FIGS. 7 to 10 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

-    38.211: Physical channels and modulation
-    38.212: Multiplexing and channel coding
-    38.213: Physical layer procedures for control
-    38.214: Physical layer procedures for data
-    38.300: NR and NG-RAN Overall Description
-    38.331: Radio Resource Control (RRC) protocol specification

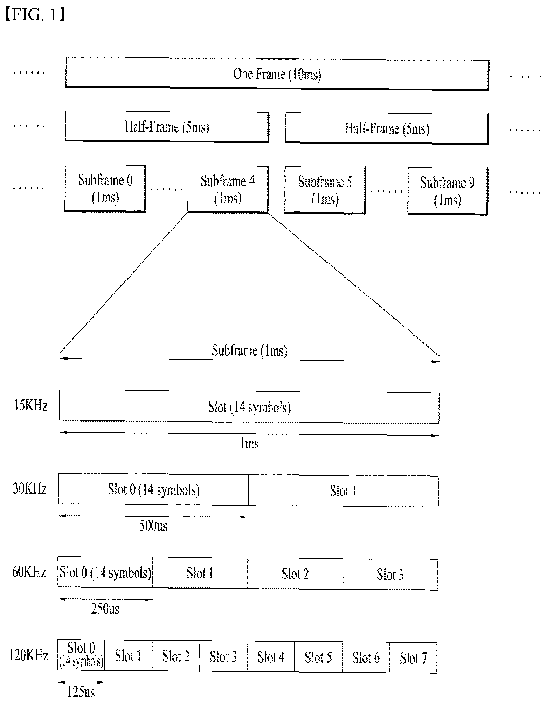

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |

(continued)

| SCS (15*2^u) | $N^{slot}_{symb}$ | $N^{frame,u}_{slot}$ | $N^{subframe,u}_{slot}$ |
|---|---|---|---|
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * -$N^{slot}_{symb}$: number of symbols in a slot<br>* $N^{frame,u}_{slot}$: number of slots in a frame<br>*$N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

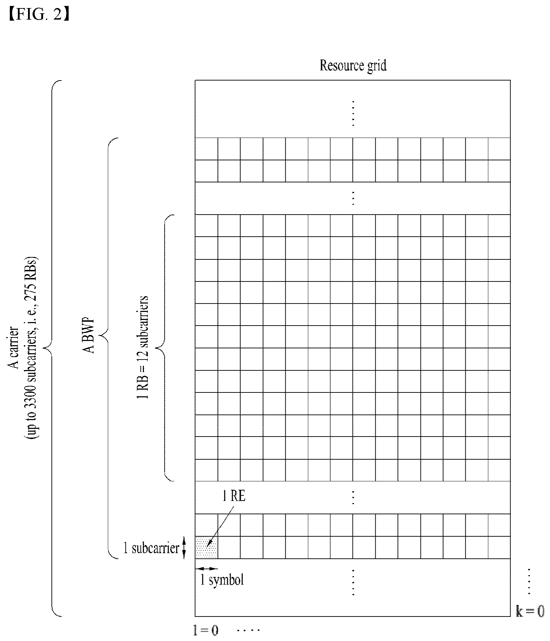

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel includes a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

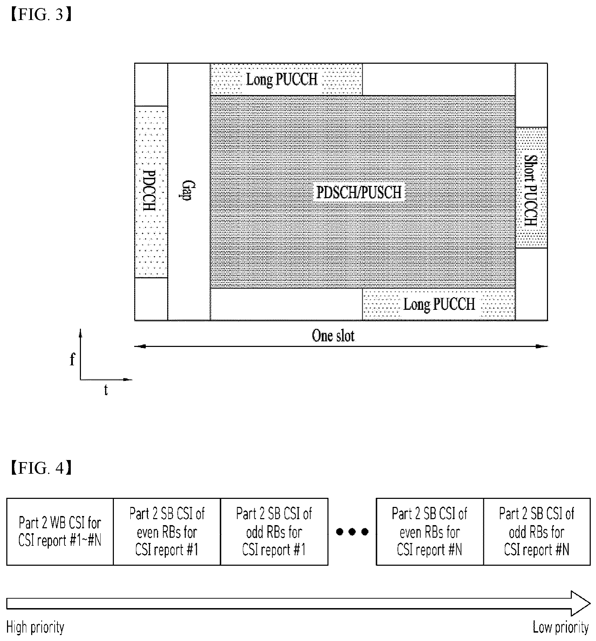

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

## 1. Priority and omission rules of multiple CSI report

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Energy saving of BSs has been considered as an important issue in wireless communication systems including 3GPP because it may contribute to establish eco-friendly networks by reducing carbon emissions and reducing the operational expenditure (OPEX) of communication service providers. In particular, as the introduction of 5G communications requires higher transmission rates, BSs need to be equipped with more antennas and provide services through wider bandwidths and frequency bands. This results in BS energy costs reaching as high as 20 % of total OPEX, according to recent researches. Due to this increased interest in BS energy saving, a new study item called "study on network energy savings" is approved in 3GPP NR release 18.

In detail, to improve the energy saving capability of the BS in terms of transmission and reception, the following enhancement techniques have been considered in the corresponding item.

- How to achieve more efficient operation dynamically and/or semi-statically and finer granularity adaptation of transmissions and/or receptions in one or more of network energy saving techniques in time, frequency, spatial, and power domains, with potential support/feedback from UE, and potential UE assistance information.

When CSI information for the number of a plurality of APs and/or a plurality of power offset values for CSI-RS resource(s) is transmitted in one CSI report, a payload size may be large compared to resources allocated to the CSI report. In this case, this specification proposes a rule for priority and omission to take some CSI information or dividing and transmitting the CSI information into other CSI reports by a UE in this case.

In this specification, the BS may instruct the UE to calculate and report CSI information for a plurality of antenna ports (APs) and/or a plurality of power offset values for one or a plurality of CSI-RS resources and adjust the number of APs for a downlink signal/channel or adjust transmission power based on the received CSI report, thereby obtaining a network energy saving (NES) gain. For example, the BS configures the UE to report, in a single CSI report, CSI information assuming the number of a plurality of APs (e.g., 64 APs and 32 APs) and/or CSI information for a plurality of CSI-RSs to PDSCH power offset values (e.g., -3 dB and 0 dB), for each CSI-RS resource or a plurality of CSI-RS resources within a CSI-RS resource set. Based on information in this report, the BS may determine the optimal number of APs and PDSCH transmission power/MCS, thereby reducing power consumption of the BS. When the amount of CSI information to be included in a CSI report is greater than the amount of resources allocated for the CSI report, a 'priority and omission rule' may be needed to sequentially determine which CSI information is to be omitted or moved to another CSI report based on priority. In the present disclosure, power offset may mean powerControlOffset, which is an RRC parameter indicating a power offset value between a PDSCH RE and a NZP CSI-RS RE (more precisely, a ratio of PDSCH EPRE to NZP CSI-RS EPRE assumed when the UE calculates CSI feedback). In the present disclosure, NAP is an abbreviation for number of antenna ports', and PCO is an abbreviation for 'power control offset (i.e., powerControlOffset)'. In this case, PCO may mean powerControlOffset, an RRC parameter indicating the power offset value of PDSCH RE relative to NZP CSI-RS RE, or may mean powerControlOffsetSS, an RRC parameter indicating the ratio between NZP CSI-RS EPRE and SS/PBCH block. In the former case, the PDSCH power may be adjusted based on the CSI-RS power, and in the latter case, the CSI-RS power may be adjusted relative to the SSB power.

In the present disclosure, the fact that the BS operates in an NES mode for ES may mean, for example, that the BS preconfigures a plurality of OFF intervals (DTX intervals of the BS) to turn off transmission of a specific DL signal for a specific time interval and dynamically indicates one of the OFF intervals to indicate that the corresponding DL signal may not be transmitted during a predefined time interval, thereby operating to obtain power consumption reduction of the BS and UE. It may also mean an operation mode that reduces power consumption of the BS and UE by not performing BWP switching, dynamic RB adaptation, and the like in the frequency domain as well as in the time domain and not performing transmission and/or reception through a specific reception antenna port of the BS when the BS turns of the corresponding reception antenna port semi-statically or dynamically in the spatial domain.

Table 4 is an excerpt from 3GPP TS 38.331 document, and Table 5 is an excerpt from 3GPP TS 38.214 document and illustrates RRC parameters for configuring NZP CSI-RS resources in the existing NR system. In particular, as seen from Tables 4 and 5, the powerControlOffset parameter is a parameter indicating a power offset between PDSCH REs and NZP CSI-RS REs.

[Table 4]

| NZP-CSI-RS-Resource ::= | SEQUENCE { | |
|---|---|---|
| nzp-CSI-RS-ResourceId | NZP-CSI-RS-ResourceId, | |
| resourceMapping | CSI-RS-ResourceMapping, | |

| powerControlOffset | INTEGER (-8..15), | |
|---|---|---|
| powerControlOffsetSS | ENUMERATED{db-3, db0, db3, db6} | OPTIONAL,  -- Need R |
| scramblingID | ScramblingId, | |
| periodicityAndOffset | CSI-ResourcePeriodicityAndOffset | OPTIONAL,  -- Cond PeriodicOrSemiPersistent |
| qcl-InfoPeriodicCSI-RS | TCI-StateId | OPTIONAL,  -- Cond Periodic |
| ... | | |
| } | | |

| powerControlOffset |
|---|
| Power offset of PDSCH RE to NZP CSI-RS RE. Value in dB (see TS 38.214 [19], clauses 5.2.2.3.1 and 4.1). |
| powerControlOffset: which is the assumed ratio of PDSCH EPRE to NZP CSI-RS EPRE when UE derives CSI feedback and takes values in the range of [-8, 15] dB with 1 dB step size. For CQI calculation based on a pair of NZP CSI-RS resources, powerControlOffset of each NZP CSI-RS resource in the pair of NZP CSI-RS resources for channel measurement is the assumed ratio of EPRE when UE derives CSI feedback and takes values in the range of [-8, 15] dB with 1 dB step size. |

[Table 5]

| powerControlOffset: which is the assumed ratio of PDSCH EPRE to NZP CSI-RS EPRE when UE derives CSI feedback and takes values in the range of [-8, 15] dB with 1 dB step size. For CQI calculation based on a pair of NZP CSI-RS resources, powerControlOffset of each NZP CSI-RS resource in the pair of NZP CSI-RS resources for channel measurement is the assumed ratio of EPRE when UE derives CSI feedback and takes values in the range of [-8, 15] dB with 1 dB step size. |
|---|
| powerControlOffsetSS: which is the assumed ratio of NZP CSI-RS EPRE to SS/PBCH block EPRE. |

The UE may know SSB transmit power of a serving BS through an RRC parameter ss-PBCH-BlockPower. The UE may know the CSI-RS transmit power (per CSI-RS resource) of the serving BS through the RRC parameter powerControlOffsetSS. The BS may adjust the transmit power of the PDSCH or adjust the MCS based on a CQI in the CSI report of the UE. When the UE receives a CSI-RS transmitted by the BS, the UE may calculate and report the CQI based on powerControlOffset in a CSI-RS resource configuration assuming that the PDSCH is power boosted or power reduced. Therefore, the UE calculates and reports the CSI assuming that there is a power fluctuation equal to an offset value compared to power of the CSI-RS actually received. The BS may adjust the power and MCS of the PDSCH appropriately based on the reported information or schedule the PDSCH by using the existing configuration without adjusting them (up to gNB implementation). If CSI information corresponding to a plurality of power offset values and/or the number of APs may be configured and/or instructed to be transmitted through a single CSI report, the BS does not need to perform RRC reconfiguration with relatively large delay or to receive a plurality of CSI reports for each of the plurality of power offset values and/or the plurality of APs to change the power offset values and/or the number of APs within a CSI-RS resource or a set of CSI-RS resources. The BS may obtain energy saving effects of the BS by receiving a plurality of power offset values and/or CSI reports for APs at once and using the received CSI reports to quickly adjust downlink power and/or adjust the number of Aps.

In an NR system, a physical uplink control channel (PUCCH) may be defined for transmitting an uplink control indicator (UCI) including HARQ-ACK and/or channel state information (CSI) and/or scheduling request (SR) and/or beam-related information. Within one slot including 14 symbols, a relatively short PUCCH (conveniently named sPUCCH) including 1 symbol or 2 symbols may be transmitted. Within one slot including 14 symbols, a relatively long PUCCH including 4 or more symbols (conveniently named long PUCCH) may be transmitted. UCI may also be transmitted via a physical uplink shared channel (PUSCH) for transmission of UL data. A PUSCH that only includes UCI and does not include uplink-shared channel (UL-SCH) may also be transmitted.

In the NR system, CSI may be broadly divided into two types, which are named Type 1 CSI and Type 2 CSI, respectively. Both Type 1 CSI and Type 2 CSI are types that perform CSI reporting based on a codebook. Type 1 CSI is a precoding matrix indicator (PMI) feedback scheme with normal spatial resolution and requires a relatively small payload size. On the other hand, Type 2 CSI is a feedback method with higher spatial resolution, requiring a relatively large payload size. Each type of CSI has three reporting methods of wideband (WB), partial band (PB), and subband (SB), depending on a bandwidth over which measurement is performed. The bandwidth corresponds to a large bandwidth in the order of WB, PB, and SB. The PB may mean an active BWP. The WB may refer to a bandwidth (BW) larger than PB, and SB may refer to a BW smaller than PB. Each type of CSI broadly includes two parts. Part 1 CSI may include rank information and a payload size thereof is not variable. Part 2 CSI may have a variable payload size depending on Part 1 CSI (i.e., depending on rank value). Depending on the periodicity of the CSI report, there may be periodic/semi-persistent/aperiodic CSI reporting methods.

For UCI information with a significantly large payload size, such as Part 2 CSI, depending on the size of the resource area of the PUCCH and/or PUSCH to be transmitted, not all information may be carried in a single transmission and some information may be omitted. Priorities may be configured based on a type of information to be carried. For example, when the number of CSI types to be reported in one slot is N (e.g., CSI process index, which may be linked to a CC index) as shown in FIG. 4, the priority for the entire part 2 CSI may be determined based on priorities determined by considering whether the CSI type is WB CSI, SB CSI, or the like and blocks with lower priorities may be sequentially omitted.

When UCI is piggybacked on a PUSCH in an NR system, a beta offset value may be configured by semi-static configuration via RRC signaling and/or dynamic indication by a UL grant depending on the UCI type and payload size of the UCI type. The corresponding beta offset may be defined as a parameter to adjust a coding rate for UCI piggyback. In detail, the beta offset may be configured separately for HARQ-ACK, CSI Part 1, and CSI Part 2. For HARQ-ACK, the beta offset may have separate values configured for cases in which a payload size is less than 3 bits, more than 3 bits and less than or equal to 11 bits, and more than 11 bits. Separate values may be configured for CSI Part 1 and CSI Part 2 when the payload size is less than or equal to 11 bits and when the payload size exceeds 11 bits, respectively. For example, as in Equation 1, the number of coded symbols Q' carrying a specific UCI (e.g., HARQ-ACK and CSI) may be configured. O may represent the payload size of the corresponding UCI, $M_{sc}^{PUSCH}$ may represent the size of the frequency axis resource region allocated to a PUSCH, $N_{symb}^{PUSCH}$ may represent the size of the time axis resource region allocated to a PUSCH, and $K_r$ may represent the information bit size of code block r. According to Equation 1, the corresponding UCI may be transmitted only for a maximum of 4 symbols within the allocated PUSCH region. A larger beta offset value results in more coded symbols being transmitted for the corresponding UCI, thus reducing a coding rate.

[Equation 1]

$$Q' = \min\left(\left\lceil \frac{O \cdot M_{sc}^{PUSCH} \cdot N_{symb}^{PUSCH} \cdot \beta_{offset}^{PUSCH}}{\sum_{r=0}^{C-1} K_r} \right\rceil, 4 \cdot M_{sc}^{PUSCH-current}\right)$$

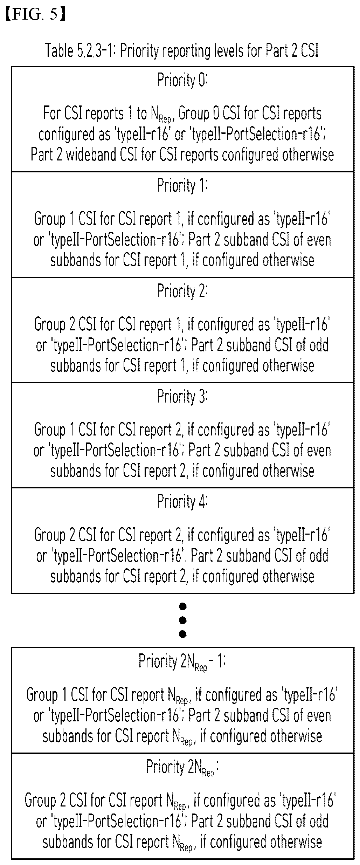

According to Section 5.2.3 of the 3GPP TS 38.214 document, when CSI reported via a PUSCH including two parts (i.e., Part 1 and Part 2), the UE may omit Part 2 CSI according to a priority order of FIG. 5. N_Rep is the number of CSI reports configured to be transmitted on a PUSCH, with priority 0 being the highest priority and priority 2N_Rep being the lowest priority. CSI report #n corresponds to a CSI report with an nth smallest Pri_iCSI (y, k, c, s) value from among the CSI reports defined in Section 5.2.5 of 3GPP TS 38.214 (see Table 6).

[Table 6]

CSI reports are associated with a priority value
$Pri_{iCSI}(y,k,s) = 2 N_{cells} \cdot M_s \cdot y + N_{cells} \cdot M_s \cdot k + M_s \cdot c + s$ where
- y=0 for aperiodic CSI reports to be carried on PUSCH y=1 for semi-persistent CSI reports to be carried on PUSCH, y=2 for semi-persistent CSI reports to be carried on PUCCH and y=3 for periodic CSI reports to be carried on PUCCH;
- k=0 for CSI reports carrying L1-RSRP or L1-SINR and k=1 for CSI reports not carrying L1-RSRP or L1-SINR;
- c is the serving cell index and $N_{cells}$ is the value of the higher layer parameter maxNrofServingCells;
- s is the reportConfigID and $M_s$ is the value of the higher layer parameter maxNrofCSI-ReportConfigurations.

The BS may turn on and off certain spatial elements for the NES or adjust a power value for a downlink signal/channel. In this specification, the spatial elements may mean antenna ports, or active transceiver chains, or panels, or transmission and reception points (TRPs). To dynamically apply various NES technologies in the spatial domain and power domain, the BS may associate CSI-RS resource sets with different antenna ports for one CSI reporting configuration (e.g., CSI-ReportConfig) or associate a plurality of power offsets (e.g., powerControlOffset parameter, which is a power offset value between a PDSCH and CSI-RS, powerControlOffsetSS parameter, which is a power offset value between SSS and CSI-RS, and the like).

At least one CSI framework from among the following methods may be introduced.

- Method#1: A plurality of sets of CSI-RS resources are linked for one CMR (abbreviation for channel measurement resource, which may be configured by a resourcesForChannelMeasurement parameter) or one IMR (abbreviation for interference measurement resource, which may be configured by csi-IM-ResourcesForInterference or nzp-CSI-RS-ResourcesForInterference parameters) within the CSI-ReportConfig configuration. For example, if CSI-RS resource set #1 and CSI-RS resource set #2 are linked for CMR, CSI-RS resources belonging to CSI-RS resource set #1 may include 16 APs and CSI-RS resources belonging to CSI-RS resource set #2 may include 8 APs.
- Method#2: When there is a set of CSI-RS resources linked to one CMR or one IMR in the CSI-ReportConfig configuration, the corresponding set includes one or more CSI-RS resources with different properties such as the number of APs and/or power offsets. For example, for CSI-RS resource set #1 configured to CMR, CSI-RS resource #1 belonging to CSI-RS resource set #1 may may be configured with 16 APs (or the power offset#1 value is configured), and CSI-RS resource #2 belonging to the same set may be configured with 8 APs (or the power offset#2 value is configured).
- Method#3: When there is a set of CSI-RS resources linked to one CMR or one IMR in the CSI-ReportConfig configuration, some or all of the CSI-RS resource(s) in the corresponding set may be configured with the number of a plurality of APs, a power offsets, and/or the like. For example, for CSI-RS resource set #1 configured to CMR, if CSI-RS resource #1 belonging to CSI-RS resource set #1 may be configured to a maximum of 16 APs, CSI reporting utilizing some of the AP(s) may be configured. Alternatively, a plurality of power offset values may be configured for CSI-RS resource #2 belonging to the same set, and CSI reporting utilizing all or part of the power offsets may be configured.

Under the above CSI framework, a CSI reporting method may be defined through at least one of the following options.

- Option#1: CSIs considering the number of a plurality of APs and/or a plurality of power offset values configured in a single CSI report may all be included in a single CSI report. Alternatively, through the configuration/instruction of the BS, CSIs that consider the number of a plurality of APs and/or a plurality of power offsets (in this case, the number of APs and/or power offsets configured/instructed through the BS may be a part of the number of APs and/or power offset values configured in the corresponding CSI report) may be included in a single CSI report.
- Option#2: Even if the number of a plurality of APs and/or a plurality of power offset values are configured in a single CSI report, CSIs considering only the number of a single AP and/or a single power offset may be included in a single CSI report through the configuration/instruction of the BS.
- Option#3: Even if the number of a plurality of APs and/or a plurality of power offset values are configured in a single CSI report, CSIs considering the number of some APs and/or some power offsets may be included in a single CSI report through determination/decision of the UE (by using criteria preconfigured by the BS or pre-defined).

L (>1) sub-configurations may be configured within a CSI-ReportConfig. Each sub-configuration may correspond to one spatial domain adaptation pattern or one power domain adaptation pattern.

Here, the spatial domain adaptation pattern may correspond to the number of specific antenna ports (or antenna port on/off pattern) or a specific CSI-RS power value (e.g., CSI-RS power value determined by the powerControlOffsetSS parameter, which is a power offset value between SSS and CSI-RS because when some antenna elements corresponding to one antenna port are turned off, it may affect the CSI-RS power value). When Method#2 is applied, if the number of APs (or power value P1) of A1 is configured for CSI-RS index#n1 belonging to a resource set, and the number of APs (or power value P2) of A2 is configured for CSI-RS index#n2 belonging to the same set, the sub-configuration index#s1 is linked with CSI-RS#n1, and sub-configuration index#s2 is linked with CSI-RS index#n2, and thus a different spatial domain adaptation pattern may be configured for each sub-configuration. When Method#3 is applied, if the number of APs A1 (or power value P1/P2) is configured to CSI-RS index#n1 belonging to the resource set, the number of APs A1 (or power value P1) is linked to the sub-configuration index#s1, and the number of APs A2 (or power value P2) constituting the CSI-RS index#n1 is linked to the sub-configuration index#s2 (A1 > A2), and thus a different spatial domain adaptation pattern may be configured for each sub-configuration.

The power domain adaptation pattern may mean that the power offset value (e.g., the power offset value determined by the powerControlOffset parameter, which is the power offset value between PDSCH and CSI-RS, the powerControlOffsetSS parameter, which is the power offset value between SSS and CSI-RS, etc.) changes. When Method#2 is applied, if the power value P1 is configured to the CSI-RS index#n1 belonging to the resource set and the power value P2 is configured to the CSI-RS index#n2 belonging to the same set, the sub-configuration index#s1 is linked to the CSI-RS index#n1, and the sub-configuration index#s2 is linked to the CSI-RS index#n2, and thus the power domain adaptation pattern may be configured differently for each sub-configuration. When Method#3 is applied, if power value P1 (power value P2) is configured to CSI-RS index#n1 belonging to the resource set, power value P1 is linked to sub-configuration index#s1, and power value P2 is linked to sub-configuration index#s2, and thus power domain adaptation patterns may be configured differently for each sub-configuration. The UE may feed back to the BS a CSI report including CSI corresponding to N (N value greater than or equal to L) sub-configuration from among the L sub-configurations (by using one of the methods of Option#1/2/3 above).

## [Method #1] Method of configuring priorities, omission rules, and CSI reporting when CSI feedback is triggered for the number of a plurality of APs and/or power offset values for CSI reporting with priority 0

Previously, only one power offset value is configured per CSI-RS resource. There is a condition that the number of ports of CSI-RS resources included in the CSI-RS resource set needs to be the same, and thus the CSI (CQI and PMI) included in the CSI report is calculated assuming a single power offset and a single number of APs. However, for energy saving, the BS may instruct the UE to transmit CSI assuming a plurality of APs and/or CSI assuming a plurality of power offset values through a single CSI report. The UE may be instructed to transmit PMI values assuming the number of a plurality of APs (e.g., PMI assuming 32 APs and PMI assuming 64 APs) and CQI values assuming a plurality of power offset values (e.g., CQI value at 0 dB and CQI value at 3 dB) in a single CSI report. In this case, the amount of resources allocated for CSI reporting may not be sufficient to include all CSI assuming the number of a plurality of APs and a plurality of power offset values.

For such cases, the BS may configure/instruct the priority and omission rules in advance, and the UE may transmit a CSI report with a high priority according to the allocated CSI report resources by omitting or transferring the CSI report with a low priority to another CSI report. For example, referring to FIG. 5, Part 2 WB CSI and Group 0 CSI of enhanced Type II CSI and e-Type II CSI from CSI Report 1 to CSI Report N_Rep are configured as one block, and CSI within one configured block has the same priority (priority 0). Therefore, if the resources allocated for CSI reporting are insufficient to carry all the information corresponding to priority 0, the block corresponding to priority 0 is dropped in its entirety. Therefore, for cases in which the amount of priority 0 CSI reporting resources is insufficient to carry all the CSIs calculated assuming a plurality of APs and/or a plurality of power offset values, a separate priority rule (additional N sub-priorities within Priority 0) may be configured/instructed by the BS or predefined.

One of the methods of configuring priority rules between CSI information is to configure separate priorities by number of APs, by power offset value, or by a combination of the two. For example, when there is a CSI assuming the number of a plurality of APs, only the CSI calculated assuming 64 APs or the CSI information calculated assuming 3 dB power offset is given a high priority, and thus the corresponding information is included first in the CSI report even when CSI reporting resources are insufficient. If the CSI-RS resource (set) index is different for the number of APs and the power offset value, the priority may be configured in the ascending or descending order of the (set) index. As another example, to prioritize more accurate CSI, a higher priority may be given to the number of APs/power offset value corresponding to CSI with higher CQI (or more layers or larger RI value). For example, if 64 ports (or 0 dB power offset value) are configured for CSI-RS resource set #1 and 32 ports (or 3 dB power offset value) are configured for CSI-RS resource set #2, and priorities are configured in ascending order of CSI-RS resource set indexes, CSI calculated assuming 64 ports (or 0 dB power offset value) may be included in CSI reporting with a higher priority than CSI calculated assuming 32 ports (or 3 dB power offset value). To inform the BS of which AP number or power offset value the CSIs in the CSI report configured by the UE are for, information related to the ordering of the CSI information may also be transmitted (for example, by including it in Part 1 CSI information). In absence of separate configuration/instructions, the existing reporting method is applied as is, and thus when a plurality of CRIs are reported (when a plurality of CSI-RS resources are configured), the CSI information corresponding to the first CRI is considered to have the highest priority, thereby configuring the CSI report.

As a detailed example of dividing sub-priorities within priority 0, it is assumed that CSI for up to two APs and two power offset values is triggered as one CSI report. Within priority 0, the priorities between sub-priorities 0/1/2/3 and priority 0 CSI may be configured/indicated/defined as 'CSI information A - CSI information calculated assuming the largest number of APs from among the CSI information calculated assuming the number of a plurality of APs) > (CSI information B - CSI information calculated assuming a smaller number of APs than CSI information A from among the CSI information calculated assuming a plurality of APs) > (CSI information C - CSI information calculated assuming the largest power offset value from among the CSI information calculated assuming a plurality of power offset values) > (CSI information D - CSI information calculated assuming a smaller power offset value than CSI information C from among the CSI information calculated assuming a plurality of power offset values)'. If the UE is instructed to feed back 64-port WB PMI, 32-port WB PMI, CQI assuming 3dB power offset, and CQI assuming 0dB power offset, but the amount of resources allocated to one CSI report is insufficient to contain all CSI information, then according to the priority and omission rules of the example above, CSI with the lowest priority may be omitted or offloaded to a next CSI report. If priority levels are divided in the order of 32 port WB PMI, CQI assuming 3 dB power offset, and CQI assuming 0 dB power offset value, considering 64 port WB PMI as the highest priority, the CQI assuming 0 dB power offset value, which is the lowest priority, may be omitted or offloaded to the next CSI report. For example, if the amount of resources allocated to a CSI report may only carry 64/32 port WB PMI, one CSI report may only contain 64/32 port WB PMI information corresponding to sub-priority 0/1, and CQI information assuming 3 dB/0 dB power offset corresponding to sub-priority 2/3 may be dropped.

When the BS operates in a general mode (i.e., Non-NES mode), the UE may perform CSI reporting in the same way as before with a priority 0 CSI report configuration method. However, when there is an explicit (group common DCI/MAC-CE) or implicit (NES state/mode=ON) instruction from the BS, the UE may divide CSIs into sub-priorities within priority 0 as described above and configure the CSIs in the CSI report. Alternatively, depending on the NES/non-NES mode of the BS, the priority may differ between a large number of APs and a small number of APs (or a large power offset and a small power offset). For example, in an NES mode, CSI information assuming a large number of APs (or a large power offset) may be given higher priority, while in a non-NES mode, CSI information assuming a small number of APs (or a small power offset) may be given higher priority.

[Method #2] Method of configuring priority and omission rules and CSI reporting when CSI feedback for the number of a plurality of APs and/or power offset values is triggered for CSI reports other than priority 0 (i.e., CSIs corresponding to priority 1 to priority 2N_Rep)

For priority levels from priority 1 to priority 2N_Rep except for priority 0 in FIG. 5, the sub-band CSI is divided into an even sub-band and an odd sub-band. When the amount of CSI report resources is insufficient, CSI reports with large CSI report numbers are sequentially omitted, and odd sub-bands within the same CSI report number are omitted first, and thus the amount of CSI information is matched to the amount of resources.

Similar to a method of subdividing the number of priorities into 2N_Rep by dividing the sub-band CSI information into even/odd numbers, priorities may be further subdivided according to the CSI type as in [Method #1]. The subdivided priorities may be configured/instructed by the BS or predefined in the UE. For example, in addition to even/odd sub-band CSI, priority levels between CSIs calculated by assuming a specific number of APs may be further subdivided. If CSI assuming a maximum number of 2 APs may be triggered with a single CSI report, the total number of priorities may be subdivided into 4N_Rep. If priorities are preconfigured from among the CSIs calculated assuming up to two power offset values, the number of priorities may be subdivided into 16N_Rep.

Another method to prioritize between CSIs is to configure separate priorities by number of APs, by power offset value, or a combination of the two. For example, when there is a CSI assuming the number of a plurality of APs, only the CSI calculated assuming 64 APs or the CSI information calculated assuming 3 dB power offset is given a high priority, and thus the corresponding information is included first in the CSI report even when CSI reporting resources are insufficient. If the CSI-RS resource (set) index is different for the number of APs and the frequency offset value, the priority may be configured in the ascending or descending order of the (set) index. For example, if 64 ports (or 0 dB power offset value) are configured for CSI-RS resource set #1 and 32 ports (or 3 dB power offset value) are configured for CSI-RS resource set #2, and priorities are configured in ascending order of CSI-RS resource set indexes, CSI calculated assuming 64 ports (or 0 dB power offset value) may be included in CSI reporting with a higher priority than CSI calculated assuming 32 ports (or 3 dB power offset value).

As another example, to prioritize more accurate CSI, a higher priority may be given to the number of APs/power offset value corresponding to CSI with higher CQI (or more layers or larger RI value). To inform the BS of which AP number or power offset value the CSIs in the CSI report configured by the UE are for, information related to the ordering of the CSIs may also be transmitted (for example, by including it in Part 1 CSI information) in the CSI report. Alternatively, in absence of separate configuration/instructions, the existing reporting method is applied as is, and thus when a plurality of CRIs are reported (when a plurality of CSI-RS resources are configured), the CSI corresponding to the first CRI is considered to have the highest priority, thereby configuring the CSI report.

As an example of a method of subdividing priorities between even/odd sub-band CSI and CSI assuming a maximum of 2 APs, if there is CSI assuming 64 APs and CSI assuming 32 APs, priority levels may be subdivided in the following order: CSI corresponding to even sub-bands among CSI assuming 64 APs with priority 1, CSI information corresponding to even sub-bands among CSI assuming 32 APs with priority 2, CSI corresponding to odd sub-bands from among CSIs assuming 64 APs with priority 3, and CSI corresponding to odd sub-bands from among CSIs assuming 32 APs with priority 4.

Alternatively, the total number of priorities may be maintained as 2N_Rep, and CSI reports may be configured with priorities configured by prioritizing the number of APs or power offset values over whether each CSI report #n is even/odd. For example, priority 1 may be configured to the CSI corresponding to even and odd sub-bands from among CSI information assuming a number of 64 APs, and priority 2 may be configured to the CSI corresponding to even and odd sub-bands from among CSIs assuming a number of 32 APs. Alternatively, the priorities may be divided in the order of CSI information corresponding to even or odd sub-bands from among CSI information assuming a number of 64 APs for priority 1, and CSI corresponding to even or odd sub-bands from among CSI information assuming a number of 32 APs for priority 2. Alternatively, a method of reducing the number of sub-bands by increasing the size of the frequency domain corresponding to each sub-band may also be used. Alternatively, priority levels may be configured in the following order: CSI corresponding to even sub-bands from among CSIs assuming 64 APs at priority 1, CSI corresponding to even sub-bands from among CSIs assuming 32 APs at priority 2, CSI corresponding to odd sub-bands from among CSIs assuming 64 APs at priority 2, and CSI corresponding to odd sub-bands from among CSIs assuming 32 APs at priority 3.

Each CSI report #n may include only sub-band CSI for a specific number of APs and/or a specific power offset value with a high priority, and for the remaining number of APs and/or power offset values, only WB CSI may be included without sub-band CSI. That is, sub-band CSI of CSI calculated assuming the number of APs and/or power offset values that are not configured to high priority may be omitted.

[Method #3] When e-type II CSI feedback corresponding to the number of a plurality of APs is triggered as a single CSI report, a method of configuring CSI reporting by applying specific priority and omission rules according to the number of APs from among e-type II CSIs

'Enhanced Type II CSI codebook' is an efficient feedback method that reduces the feedback overhead of CSI of the existing Type II CSI codebook based on the space-frequency domain compression method while maintaining a certain level of MU-MIMO performance gain. For e-type II CSI (Enhanced type II CSI), UCI Part 2 is divided into three groups, and the CSI information included in each group is as shown in Table 7. The priority order by group is G0>G1>G2, and priority levels of UCI information included in G1 and G2 are calculated as $\text{Pri}(l,i,f)=2\cdot L\cdot \upsilon\cdot\pi(f)+\upsilon\cdot i+l$ described in 3GPP TS 38.214, and when the values are sorted in ascending order, the UCIs corresponding to the upper half index include G1, and the UCIs corresponding to the lower half index include G2.

[Table 7]

| Group 0 (G0) | SD indicator, SCI(s), SD rotation factor |
|---|---|
| Group 1 (G1) | FD indicator, Reference amplitude(s), NZCs for G1, Bitmap for G1 |
| Group 2 (G2) | NZCs for G2, Bitmap for G2 |

As seen from FIG. 5, e-type II CSI Part 2 CSI omission is omitted first because it has the lowest priority in the order of the highest CSI report number, and within the same CSI report number, G2 has the lowest priority and is omitted first. Depending on the amount of resources allocated to the CSI report, the UCIs with the lowest priority, located at the bottom in FIG. 5, are sequentially omitted, alternating between G2 and G1, and if there is still insufficient space for the CSI report, the UCIs included in G0 are omitted.

The e-type II CSI information belonging to each G0/G1/G2 may be calculated assuming a specific number of APs, and for a plurality of APs, the e-type II CSI corresponding to each number of APs may be calculated respectively. In this case, the BS may trigger eType II CSI feedback corresponding to the number of a plurality of APs as a single CSI report, and priority and omission rules for each AP number may be configured/instructed/defined in advance. For example, the BS may configure/instruct (or predefine to the UE) a CSI calculated assuming a larger number of APs in advance to have a higher priority, and instruct that the UCI belonging to G0 from among the e-type II CSI calculated assuming a number of 64 APs and the UCI belonging to G0 from among the e-type II CSI calculated assuming a number of 32 APs be transmitted simultaneously as a single CSI report. If the amount of resources allocated to a CSI report is not sufficient to contain all CSIs, the G0 CSI calculated assuming 64 APs is included in the CSI report with priority, and the G0 CSI calculated assuming 32 APs may be omitted or included in the CSI report with the next highest priority.

Another method to configure priorities between CSIs is to consider configuration of priorities by the number of APs. For example, when there is a CSI assuming the number of a plurality of APs, only the G0/G1/G2 CSI calculated assuming 64 APs is configured to a high priority, and thus the corresponding information may be included in the CSI report first even when CSI reporting resources are insufficient. If the CSI-RS resource (set) index is different for the number of APs, the priority may be configured in the ascending or descending order of the (set) index. For example, if 64 ports are configured for CSI-RS resource set #1 and 32 ports are configured for CSI-RS resource set #2, and the priorities are configured in ascending order, G0/G1/G2 CSI calculated assuming 64 ports may be configured in CSI reporting with a higher priority than G0/G1/G2 CSI calculated assuming 32 ports.

Similarly, for e-type II CSIs belonging to G1 and G2, priority and omission rules may be configured/instructed/-defined in advance for each CSI information calculated assuming a specific number of APs. Alternatively, the amount of CSI may be controlled by adjusting the granularity in the spatial domain. For example, the total number of priorities may be maintained as 2N_Rep, and CSI reports may be configured by considering priorities from among the number of APs rather than priorities from among groups (such as G1 or G2) for each CSI report#n. For example, priority 1 may be configured to the CSI corresponding to G1 and G2 from among the CSIs assuming a number of 64 APs, and priority 2 may be configured to the CSI corresponding to G1 and G2 from among the CSIs assuming a number of 32 APs. Alternatively, the priorities may be configured in the following order: CSI corresponding to G1 or G2 from among CSIs assuming 64 APs for priority 1, CSI corresponding to G1 or G2 from among CSIs assuming 32 APs for priority 2. Alternatively, priority levels may be configured in the following order: CSI corresponding to G1 from among CSI information assuming 64 APs and CSI corresponding to G1 from among CSIs assuming 32 APs, and CSI corresponding to G2 from among CSIs assuming 64 APs and CSI corresponding to G2 from among CSI assuming 32 APs, for priority 1. Specifically, when reporting CSI assuming multiple APs, e-Type II CSI feedback may not be used, taking into account a processing timeline, and only Type I and Type II CSI feedback may be used.

In the present disclosure, a specific number of APs or specific power offset values may correspond to a specific sub-configuration index from among a plurality of CSI reporting sub-configurations included in a CSI reporting configuration. For example, a spatial domain adaptation pattern with a number of 64 APs and a spatial domain adaptation pattern with a number of 32 APs may correspond to sub-configuration index #0 and sub-configuration index #1, respectively. The BS may configure/instruct to report a plurality of CSIs corresponding to N sub-configurations from among L sub-configurations configured in the CSI reporting configurations as one CSI report. The number of sub-configuration indices corresponding to the CSI included in each CSI report or the number of sub-configuration indices corresponding to which CSI information is included may differ for each CSI report, and thus when calculating the priority for each CSI report by using the formula in Table 6, the number of sub-configuration indices and the number of sub-configuration indices included in the CSI report may be considered together.

For example, $\text{Pri}_{iCSI}(y,k,c,s,p,q) = 2N_{cells}\cdot M_s \cdot y + N_{cells}\cdot M_s \cdot k + M_s \cdot c + s + (L-p) + q$ $\text{Pri}_{iCSI}(y,k,s,p,q) = 2 \cdot N_{cells} \cdot y + N_{cells} \cdot M_s + k + M_s \cdot c + s + (L-p) + q$, and in this case, the sub-configuration index p and the number q of sub-configurations included in the CSI report from among the total L sub-configuration indices are added as parameters to the formula, and the higher the sub-configuration index included in the CSI report and the more sub-configurations included in the CSI report, the higher the priority the CSI report may have. In the case of the existing CSI reporting, there is no sub-configuration index, and thus the priority may always be calculated under the state of p=L and q=0.

As another example, a sub-configuration index q and the maximum number of sub-configuration indices q_max may be added as parameters to the formula, such as $\text{Pri}_{iCSI}(y,k,c,s,q) = 2 \cdot q_{max} \cdot N_{cells} \cdot M_s \cdot y + q_{max} \cdot N_{cells} \cdot M_s \cdot k + q_{max} \cdot M_s \cdot C + q_{max} \cdot s + q$. The lower the sub-configuration index included in a CSI report, the higher priority that CSI report may have. Here, in the case of the existing CSI reporting, there is no sub-configuration index, and thus the priority may always be calculated under the state of q=0.

When the priority of a CSI report including specific CSI(s) is calculated by considering the number or index of sub-configurations through the formula, if the resources allocated for the CSI report are insufficient to carry all the CSI information as in the proposed methods, the sub-configuration index and/or number may also be considered for the omission rule of CSI Part 2.

When Part 2 CSI is omitted according to the priority order of FIG. 5, additional priority levels may be defined considering the sub-configuration index and/or the number N indicated to be included in the CSI report. For example, when each priority level of CSI Part 2 is defined, a more detailed priority level may be defined by applying not only the number of CSI reports, N_Rep, but also the number of sub-configuration indices N (and/or up to index) configured/instructed to be included in the CSI report. For example, if the N_Rep value is 2, and the first CSI report is the existing CSI report with a single CSI without sub-configuration indices, and the second CSI report is a CSI report with N=4 with 4 sub-configuration indices, then the priority level defined as total N_Rep=5 is configured, and the Part 2 CSI with the lowest priority may be omitted. Depending on the number N of sub-configuration indices configured/instructed to be included in the CSI report, the priority level may be configured such that the larger N means a higher priority, or the higher (or lower) the sub-configuration indices included in the CSI report mean a higher priority.

[Method #4] Method in which WB CSI corresponding to a sub-configuration with lower priority is always omitted from priority 0 CSI reporting, according to a priority configured for each sub-configuration

In the present disclosure, each of a specific number of APs or specific power offset values may be configured to correspond to a sub-configuration having a specific index within the CSI reporting configuration. The BS may configure a total of L sub-configurations to the UE and trigger/activate a plurality of CSIs corresponding to N (N>1) sub-configurations to be transmitted as a single CSI report. In this case, priorities may be configured for sub-configuration corresponding to the number of specific APs or a specific power offset value, as described above. Depending on the priority, CSI may be configured differently (e.g., certain CSI information is always omitted), for each of the N sub-configuration indices that are triggered/enabled to be included in CSI reporting (especially within priority 0). In detail, from among the plurality of sub-configuration indices triggered/activated to be included in the (priority 0) CSI report, CSI information corresponding to a sub-configuration with a relatively high priority may be configured/instructed to always include WB CSI, and WB CSIs corresponding to other sub-configurations with lower priorities may be configured/instructed to always be omitted. That is, when priorities are preconfigured by sub-configuration index and a single (priority 0) CSI report includes CSI corresponding to a plurality of sub-configurations, the WB CSI for a sub-configuration with a low priority may always be omitted considering the resources allocated to the CSI report.

For example, within the CSI reporting configuration, a sub-configuration index #1 corresponding to the number of 64 APs, a sub-configuration index #2 corresponding to the number of 32 APs, a sub-configuration index #3 corresponding to -3dB power offset, and a sub-configuration index ##4 corresponding to 0dB power offset may be configured, and the sub-configuration indexes #1 and #3 may be configured with high priorities, and the sub-configuration indexes #2 and #4 may be configured with low priorities. In this case, when CSI reporting is triggered/enabled such that CSI corresponding to all sub-configurations is included in one CSI report, WB CSI is included in the CSI report for sub-configuration indices #1 and #3 corresponding to high priorities, and WB CSI information for sub-configuration indices #2 and #4 corresponding to low priorities may be omitted and may not be included in the CSI report.

Alternatively, the priority may be considered to be configured automatically based on the sub-configuration index configured in CSI-ReportConfig. There may be a predetermined rule (in a standard document or the like) or a predetermined rule (from among the triggered/activated sub-configuration indices) that only the lowest or highest index is given high priority (or only Y indices including the lowest index are given high priority) and the remaining indices are given low priority. In this case, if a sub-configuration index #1 corresponding to the number of 64 APs, a sub-configuration index #2 corresponding to the number of 32 APs, a sub-configuration index #3 corresponding to -3 dB power offset, and a sub-configuration index #4 corresponding to 0 dB power offset are configured within the CSI reporting configuration, the sub-configuration index #1 is considered to have the highest priority, and thus the WB CSI information corresponding to the number of 64 APs is included in the CSI report, and the WB CSI information corresponding to the remaining sub-configuration indices may be omitted and may not be included in the CSI report.

[Method #5] Method in which only CSI information corresponding to some sub-configurations is omitted when CSI corresponding to a plurality of sub-configuration indices is included in one CSI report and priority and omission rules are applied to each CSI report

When a CSI corresponding to N (>1) sub-configurations is configured for a single CSI report based on the CSI report configurations, the CSI Parts 1 and 2, and the CSI priority and omission rules of the legacy CSI report need to be strengthened or modified. Table 8 shows approaches to CSI mapping, priority and omission rules for CSI with a plurality of sub-configurations discussed in the RAN1#113 meeting.

[Table 8]

| Proposal |
|---|
| For N(>1) CSIs reporting based on a CSI report configuration, down select from the below |
| •Approach 1: CSI mapping order for CSI Part 1 or Part 2 and CSI omission/priority rule are performed per CSI report, |
| - CSI Part 1: CSI quantities (such as CRI, RI and CQI when applicable) corresponding to all of N sub-configurations are multiplexed into a single CSI Part 1 |
| ∘mapping order is determined as |
| ▪ e.g., CSI quantity first and sub-configuration index second, or sub-configuration index first and CSI quantity second |
| - CSI Part 2: two priority reporting levels can be allocated to a CSI report |
| ∘Each priority reporting level is determined as |

(continued)

> - e.g., even subbands of all N sub-configurations for the priority reporting level and odd subbands of all N sub-configurations for the second priority reporting level)
> ○For CSI omission, legacy mechanism can be reused
> •Approach 2: CSI mapping order for CSI Part 1 or Part 2 and CSI omission/priority rule are performed per sub-configuration
> - CSI Part 1: CSI quantities (such as CRI, RI and CQI when applicable) corresponding to each sub-configuration is separately generated then concatenated into a single bit sequence for CSI part 1 for the CSI report configuration
> - CSI part 2: two priority reporting levels can be allocated to each sub-configuration, i.e., 2 x N priority reporting levels in total.
> °For CSI omission/priority rule, sub-configuration index needs to be additionally considered and $Pr_{iCSI}(y,k,c,s)$ in 214 specification can be modified, as follows:
> - $Pr_{iCSI}(y,k,c,s,q) = 2 \cdot q_{max} \cdot N_{cells} \cdot M_s \cdot y + q_{max} \cdot N_{cells} \cdot M_s \cdot k + q_{max} \cdot M_s \cdot c + q_{max} \cdot s + q$
> where q is the sub-configuration index and $q_{max}$ is the maximum number of sub-configuration indexes in a CSI report configuration.
> •Approach 3:
> - CSI Part 1: CSI quantities (such as CRI, RI and CQI when applicable) associated with a reference sub-configuration
> ○a reference sub-configuration, for example, which is the sub-configuration with the largest number of antenna ports based on the corresponding (N1, N2) values
> - CSI Part 2: remaining CSI quantities for the reference sub-configuration (e.g., PMI, LI), and (N-1) CSIs for the remaining sub-configurations
> ○Note: if CSI payload reduction is supported, the payload for a corresponding CSI quantity is determined as e.g. [omitted, differentiated etc.]

In the case of Approach 1, the CSI mapping order and CSI priority and omission rules of CSI Parts 1 and 2 are applied per CSI report unit (per CSI report), similar to the existing CSI report. When CSIs corresponding to N sub-configurations are configured within a CSI report, all CSI quantities (e.g., CRI, RI, and CQI) corresponding to the N sub-configurations are multiplexed into one CSI Part 1 to configure CSI report #n. As in the past, CSI Part 2 is configured such that even sub-band CSI corresponding to all N sub-configurations in the same CSI report #n is given first priority, even sub-band CSI is given second priority, and the like according to priority level. If the amount of resources allocated to CSI report is not sufficient to include all CSI, lower priority blocks, i.e. odd sub-band CSI, are omitted first.

For example, if four sub-configurations (index #1, #2, #3, and #4) are included in CSI report #1 and triggered/activated to be reported on a PUSCH or a PUCCH, CSI part 2 may include block #1, which is CSIs corresponding to even sub-bands of all sub-configurations #1, #2, #3, and #4, and block #2, which is CSIs corresponding to odd sub-bands. If the resources allocated to the CSI report are not sufficient to carry both block #1 and block #2, the UE may omit block #2 depending on the priority level. In this case of block-level omission, even if the amount of resources allocated to CSI reporting is insufficient to carry all of block #2, but odd sub-band CSI for some indices from among the sub-configurations included in block #2 may be included, all odd-subband CSI of all sub-configurations needs to always be omitted, which may be inefficient in terms of CSI feedback accuracy or resource utilization. Therefore, as in Approach 1, when the CSI priority and omission rules of the CSI reporting unit are applied, a method in which omission is performed in sub-configuration units rather than the entire block may be considered.

If it is possible to apply a method in which only some sub-configurations are omitted rather than the entire block, then in the above example, if there is insufficient CSI reporting resources to include the entire block #2 in the CSI report, but odd sub-band CSI corresponding to two sub-configurations may be included in the CSI report, the odd sub-band CSI corresponding to specific two sub-configuration indices may be included in the CSI report, and only some odd sub-band CSI corresponding to the remaining two sub-configuration indices may be omitted.

When a similar principle may be applied, if the amount of resources is not sufficient for a CSI report to include both block #1 and block #2, then after block #2 is dropped first, only the even sub-band CSI corresponding to some sub-configurations within block #1 may be included in the CSI report, and only the even sub-band CSI corresponding to the remaining some sub-configurations may be omitted.

If CSI Part 1 corresponding to N(>1) sub-configurations that are triggered/activated may not all be included in the CSI report even after dropping Block #1 and Block #2, a similar principle as CSI Part 2 may be applied to CSI Part 1. Therefore, it is possible to prevent CSI corresponding to some sub-configurations rather than the entire CSI Part 1 from being omitted, and to prevent CSI Part 1 from being omitted entirely.

Not only 3GPP TS 38.214 but also 3GPP TS 38.213 Section 9.2.5.2 describes that when CSI resources may not contain all CSI, the UE performs omission (drop) on a CSI reporting basis. Tables 9 and 10 are excerpts from 3GPP TS 38.213 Section 9.2.5.2.

[Table 9]

If a UE has HARQ-ACK, SR and wideband or sub-band CSI reports to transmit and the UE determines a PUCCH resource with PUCCH format 2, or the UE has HARQ-ACK, SR and wideband CSI reports [6, TS 38.214] to transmit and the UE determines a PUCCH resource with PUCCH format 3 or PUCCH format 4, where

- the UE determines the PUCCH resource using the PUCCH resource indicator field [5, TS 38.212] in a last of a number of DCI formats with a value of a PDSCH-to-HARQ_feedback timing indicator field, if present, or a value of dl-DataToUL-ACK, or dl-DataToUL-ACK-r16, or d1-DataToUL-ACK-DCI-1-2, or d1-DataToUL-ACK-r17, or dl-Data-ToUL-ACK-DCI-1-2-r17, indicating a same slot for the PUCCH transmission, from a PUCCH resource set provided to the UE for HARQ-ACK transmission, and

- the UE determines the PUCCH resource set as described in clause 9.2.1 and clause 9.2.3 for $O_{UCI}$ UCI bits and

- if $\left( O_{ACK} + O_{SR} + O_{CSI-part1} + O_{CRC,CSI-part1} \right) \le M_{RB}^{PUCCH} \cdot N_{sc,ctrl}^{RB} \cdot N_{symb-UCI}^{PUCCH} \cdot Q_m \cdot r$ , the UE transmits the HARQ-ACK, SR, and CSI reports bits by selecting the minimum number $M_{RB,min}^{PUCCH}$ of the $M_{RB}^{PUCCH}$ PRBs satisfying $\left( O_{ACK} + O_{SR} + O_{CSI-part1} + O_{CRC,CSI-part1} \right) \le M_{RB,min}^{PUCCH} \cdot N_{sc,ctrl}^{RB} \cdot N_{symb-UCI}^{PUCCH} \cdot Q_m \cdot r$ as described in clauses 9.2.3 and 9.2.5.1; 1

- else, the UE selects $N_{CSI}^{reported}$ CSI report(s), from the $N_{CSI}^{total}$ CSI reports, for transmission together with HARQ-ACK and SR in ascending priority value [6, TS 38.214], where the value of $N_{CSI}^{reported}$ satisfies

$$\left( O_{ACK} + O_{SR} + \sum_{n=1}^{N_{CSI}^{reported}} O_{CSI-part1,n} + O_{CRC,CSI-part1,N} \right) \le M_{RB}^{PUCCH} \cdot N_{sc,ctrl}^{RB} \cdot N_{symb-UCI}^{PUCCH} \cdot Q_m \cdot r$$ and

$$\left( O_{ACK} + O_{SR} + \sum_{n=1}^{N_{CSI}^{reported}+1} O_{CSI-part1,n} + O_{CRC,CSI-part1,N+1} \right) > M_{RB}^{PUCCH} \cdot N_{sc,ctrl}^{RB} \cdot N_{symb-UCI}^{PUCCH} \cdot Q_m \cdot r$$ , where $O_{CRC,CSI-part1, N}$ is a number of CRC bits corresponding to $O_{ACK} + O_{SR} + \sum_{n=1}^{N_{CSI}^{reported}} O_{CSI-part1,n}$ UCI bits, and $O_{CRC<CSI-part1, N+1}$ is a number of CRC bits corresponding to $O_{ACK} + O_{SR} + \sum_{n=1}^{N_{CSI}^{reported}+1} O_{CSI-part1,n}$ UCI bits.

[Table 10]

If a UE has HARQ-ACK, SR and sub-band CSI reports to transmit and the UE determines a PUCCH resource with PUCCH format 3 or PUCCH format 4, where

- the UE determines the PUCCH resource using the PUCCH resource indicator field [5, TS 38.212] in a last of a number of DCI formats with a value of a PDSCH-to-HARQ_feedback timing indicator field indicating a same slot for the PUCCH transmission, or by a value provided by *dl-DataToUL-ACK* or *dl-DataToUL-ACK-r16* or *dl-DataToUL-ACK-DCI-1-2* or *dl-DataToUL-ACK-r17* or *dl-DataToUL-ACK-DCI-1-2-r17* if the PDSCH-to-HARQ feedback timing indicator field is not present in the last DCI format, from a PUCCH resource set provided to the UE for HARQ-ACK transmission, and

- the UE determines the PUCCH resource set as described in clause 9.2.1 and clause 9.2.3 for $O_{UCI}$ UCI bits and

- if $\left(O_{\mathrm{ACK}} + O_{\mathrm{SR}} + O_{\mathrm{CSI}} + O_{\mathrm{CRC}}\right) \leq M_{\mathrm{RB}}^{\mathrm{PUCCH}} \cdot N_{\mathrm{sc,ctrl}}^{\mathrm{RB}} \cdot N_{\mathrm{symb\text{-}UCI}}^{\mathrm{PUCCH}} \cdot Q_m \cdot r$ , the UE transmits the HARQ-ACK, SR and the $N_{\mathrm{CSI}}^{\mathrm{total}}$ CSI report bits by selecting the minimum

number $M_{\mathrm{RB,min}}^{\mathrm{PUCCH}}$ of PRBs from the $M_{\mathrm{RB}}^{\mathrm{PUCCH}}$ PRBs satisfying $\left(O_{\mathrm{ACK}} + O_{\mathrm{SR}} + O_{\mathrm{CSI}} + O_{\mathrm{CRC}}\right) \leq M_{\mathrm{RB,min}}^{\mathrm{PUCCH}} \cdot N_{\mathrm{sc,ctrl}}^{\mathrm{RB}} \cdot N_{\mathrm{symb\text{-}UCI}}^{\mathrm{PUCCH}} \cdot Q_m \cdot r$ as described in clauses 9.2.3 and 9.2.5.1

- else,

- if for $N_{\mathrm{CSI\text{-}part2}}^{\mathrm{reported}} > 0$ Part 2 CSI report priority value(s), it is

$$\sum_{n=1}^{N_{\mathrm{CSI\text{-}part2}}^{\mathrm{reported}}} O_{\mathrm{CSI\text{-}part2},n} + O_{\mathrm{CRC,CSI\text{-}part2},N} \leq \left( M_{\mathrm{RB}}^{\mathrm{PUCCH}} \cdot N_{\mathrm{sc,ctrl}}^{\mathrm{RB}} \cdot N_{\mathrm{symb\text{-}UCI}}^{\mathrm{PUCCH}} - \left[ \left( O_{\mathrm{ACK}} + O_{\mathrm{SR}} + \sum_{n=1}^{N_{\mathrm{CSI}}^{\mathrm{total}}} O_{\mathrm{CSI\text{-}part1},n} + O_{\mathrm{CRC,CSI\text{-}part1}} \right) \Big/ (Q_m \cdot r) \right] \right) \cdot Q_m \cdot r \quad \text{and}$$

$$\sum_{n=1}^{N_{\mathrm{CSI\text{-}part2}}^{\mathrm{reported}}+1} O_{\mathrm{CSI\text{-}part2},n} + O_{\mathrm{CRC,CSI\text{-}part2},N+1} > \left( M_{\mathrm{RB}}^{\mathrm{PUCCH}} \cdot N_{\mathrm{sc,ctrl}}^{\mathrm{RB}} \cdot N_{\mathrm{symb\text{-}UCI}}^{\mathrm{PUCCH}} - \left[ \left( O_{\mathrm{ACK}} + O_{\mathrm{SR}} + \sum_{n=1}^{N_{\mathrm{CSI}}^{\mathrm{total}}} O_{\mathrm{CSI\text{-}part1},n} + O_{\mathrm{CRC,CSI\text{-}part1}} \right) \Big/ (Q_m \cdot r) \right] \right) \cdot Q_m \cdot r$$, the UE selects the first $N_{\mathrm{CSI\text{-}part2}}^{\mathrm{reported}}$ Part 2 CSI reports, according to respective priority value(s) [6, TS 38.214], for transmission together with the HARQ-ACK, SR and $N_{\mathrm{CSI}}^{\mathrm{total}}$ Part 1 CSI reports, where $O_{\mathrm{CSI\text{-}part1},\,n}$ is the number of Part 1 CSI report bits for the $n_{\mathrm{th}}$ CSI report and $O_{\mathrm{CSI\text{-}part2},n}$ is the number of Part 2 CSI report bits for the $n_{\mathrm{th}}$ CSI report priority value, sported $O_{\mathrm{CRC,CSI\text{-}part2},\,N}$

is a number of CRC bits corresponding to $\sum_{n=1}^{N_{\mathrm{CSI\text{-}part2}}^{\mathrm{reported}}} O_{\mathrm{CSI\text{-}part2}n}$ , and $O_{\mathrm{CRC,CSI\text{-}part2},\,N+1}$ is a number of CRC bits corresponding to $\sum_{n=1}^{N_{\mathrm{CSI\text{-}part2}}^{\mathrm{reported}}+1} O_{\mathrm{CSI\text{-}part2},n}$

- else, the UE drops all Part 2 CSI reports and selects $N_{\text{CSI-part1}}^{\text{reported}}$ Part 1 CSI report(s), from the $N_{\text{CSI}}^{\text{total}}$ CSI reports in ascending priority value [6, TS 38.214], for transmission together with the HARQ-ACK and SR information bits where the value of

$$N_{\text{CSI-part1}}^{\text{reported}} \text{ satisfies } \left( O_{\text{ACK}} + O_{\text{SR}} + \sum_{n=1}^{N_{\text{CSI-part1}}^{\text{reported}}} O_{\text{CSI-part1},n} + O_{\text{CRC,CSI-part1},N} \right) \le M_{\text{RB}}^{\text{PUCCH}} \cdot N_{\text{sc,ctrl}}^{\text{RB}} \cdot N_{\text{symb-UCI}}^{\text{PUCCH}} \cdot Q_m \cdot r \quad \text{and}$$

$$\left( O_{\text{ACK}} + O_{\text{SR}} + \sum_{n=1}^{N_{\text{CSI-part1}}^{\text{reported}}+1} O_{\text{CSI-part1},n} + O_{\text{CRC,CSI-part1},N+1} \right) > M_{\text{RB}}^{\text{PUCCH}} \cdot N_{\text{sc,ctrl}}^{\text{RB}} \cdot N_{\text{symb-UCI}}^{\text{PUCCH}} \cdot Q_m \cdot r$$

where $O_{\text{CRC<CSI-part1},N}$ is a number of CRC bits corresponding to

$$O_{\text{ACK}} + O_{\text{SR}} + \sum_{n=1}^{N_{\text{CSI-part1}}^{\text{reported}}} O_{\text{CSI-part1},n}$$

UCI bits, and $O_{\text{CRC,CSI-part1, }N+1}$ is a number of CRC bits corresponding to $O_{\text{ACK}} + O_{\text{SR}} + \sum_{n=1}^{N_{\text{CSI-part1}}^{\text{reported}}+1} O_{\text{CSI-part1},n}$ UCI bits.

For the parts described in Table 9 and Table 10 to perform omission (drop) on a CSI reporting basis (the parts described as 'the UE selects -' or 'the UE drops -'), it may be efficient to perform omission (drop) on a sub-configuration basis to avoid CSI information from being dropped more than necessary. For example, if the number of sub-configurations triggered/activated to be included in the CSI report is N=3 (sub-configuration index #1, #2, #3), and the resources allocated to the CSI report are insufficient to contain Part 2 CSI of all sub-configuration indices but Part 2 CSI of sub-configuration index #1 may be contained, then instead of Part 2 of all sub-configuration indices being omitted (dropped), only Part 2 CSI of sub-configuration indexes #2 and #3 are omitted (dropped), and Part 2 CSI of sub-configuration index #1 may be included in the CSI report.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by base stations, but the operations may also be performed by relay nodes.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

Implementation Examples

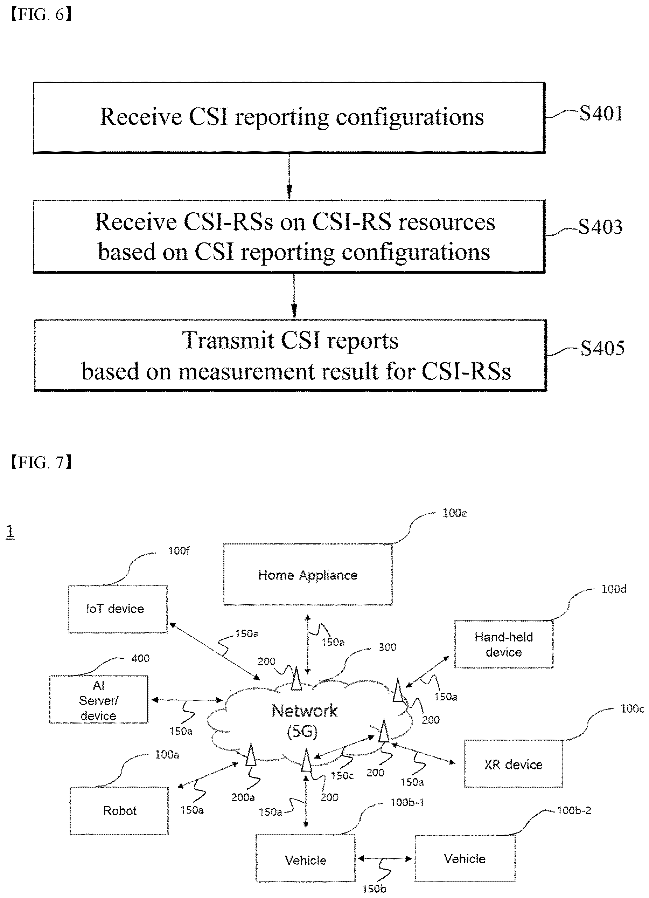

FIG. 6 is a flowchart of a signal transmission and reception method according to embodiments of the present disclosure.

Referring to FIG. 6, embodiments of the present disclosure may be performed by a UE and may include receiving CSI reporting configurations (S401), receiving CSI-RSs on CSI-RS resources based on the CSI reporting configurations (S403), and transmitting CSI reports based on a measurement result for the CSI-RSs (S405).

In addition to the operations of FIG. 6, one or more of the operations described through Section 1 may be further performed.

The CSI reporting configuration of FIG. 6 may be CSI-ReportConfig, which is an RRC parameter. A single CSI reporting configuration may contain one or more CSI-RS resource set configurations. A single CSI-RS resource set configuration may include one or more CSI-RS resource configurations. Table 4 illustrates CSI-RS resource configurations that may be configured via RRC signaling.

As described above, CSI by the existing NR system may be divided into type 1 CSI and type 2 CSI. Each type of CSI is divided into Part 1 CSI and Part 2 CSI. Referring to Table 7, Part 2 CSI of e Type 2 CSI includes Group 0 CSI, Group 2 CSI, and Group 2 CSI.

For each CSI report, a priority level is determined as shown in FIGS. 4 and 5. In the existing NR system, the higher the CSI report number (or CSI report index), the lower the priority, and within the same CSI report number, the higher the group index, the lower the priority. However, UCIs included in G0 (Group 0 CSI) are configured to the highest priority (priority 0) regardless of the CSI reporting number. The UE may optionally omit all Part 2 CSI at a given priority level (in descending order of priority index) in descending order of priority.

According to the additional proposal in this specification compared to the existing NR system, L sub-configurations may be included in CSI-ReportConfig. Each sub-configuration may correspond to a spatial domain adaptation pattern or a power domain adaptation pattern. The spatial domain adaptation patterns correspond to a specific number of antenna ports, and thus each sub-configuration may include parameters for a specific number of antenna ports. The power domain adaptation patterns correspond to specific power offset values, and thus each sub-configuration may include parameters for specific power offset values.

As described above, CSI corresponding to one sub-configuration included in a specific CSI reporting configuration is fed back to the BS by being included in the CSI report. To distinguish from CSI reports corresponding to CSI reporting configurations, CSI reports corresponding to sub-configurations may be referred to as CSI sub-reports (or sub-reports).

In each method of this specification, priority and omission rules for sub-configurations are disclosed under this background.

In particular, referring to Method #2, priority and omission rules are disclosed for cases in which a CSI report other than priority 0 contains a plurality of sub-reports.

In detail, Method 2 discloses the following:

As an example of a method of subdividing priorities between even/odd sub-band CSI and CSI assuming a maximum of 2 APs, if there is CSI assuming 64 APs and CSI assuming 32 APs, priority levels may be subdivided in the following order: CSI corresponding to even sub-bands among CSI assuming 64 APs with priority 1, CSI information corresponding to even sub-bands among CSI assuming 32 APs with priority 2, CSI corresponding to odd sub-bands from among CSIs assuming 64 APs with priority 3, and CSI corresponding to odd sub-bands from among CSIs assuming 32 APs with priority 4.

Referring to FIG. 5, in the existing NR system, the CSI corresponding to the even sub-band is group 1 CSI, and the CSI corresponding to the odd sub-band is group 2 CSI. The CSI assuming 64 APs is a spatial domain adaptation pattern for the configuration of the number of antenna ports, and thus corresponds to a sub-CSI report corresponding to a sub-configuration. Therefore, the proposal of Method #2 may be understood as subdividing Group 1 CSI or Group 2 CSI corresponding to the same priority level into sub-configuration levels. When the priority level is subdivided based on the sub-configuration level, the UE may omit CSI by sub-configuration level even within the same priority level, without omitting all information of a specific priority level as in the past. Accordingly, the UE may omit sub-reports for even sub-bands according to the priority of the sub-configuration level (omitting sub-reports with higher sub-configuration indices within group 1 CSI), or omit sub-reports for odd sub-bands according to the priority of the sub-configuration level (omitting sub-reports with higher sub-configuration indices within group 2 CSI). Only sub-reports for even sub-bands or only sub-reports for odd sub-bands are included within the same priority level, and thus after group 2 CSI of a sub-report corresponding to a specific sub-configuration index n is omitted, group 2 CSI of a sub-report corresponding to sub-configuration index n-1 is omitted before group 1 CSI of a sub-report corresponding to the corresponding sub-configuration index n is omitted.

In summary, in a situation in which a plurality of CSI reporting configurations are received by a UE as in FIG. 6 and the UE transmits a plurality of CSI reports, if a first CSI reporting configuration including sub-configurations corresponds to the first CSI including sub-reports, omission of Part 2 CSI for the second CSI report is performed at a sub-configuration level within the same priority level. For the second CSI report that does not include sub-configurations, the same operation as in the existing NR system is performed. Therefore, based on that the second CSI reporting configuration that does not include sub-configurations corresponds to the second CSI report that does not include sub-reports, omission of Part 2 CSI for the second CSI report is performed for all information of a particular priority level.

In addition to the operations of FIG. 6, one or more of the operations described with reference to FIGS. 1 to 5 and the operations described with reference to section 1 may be also performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 7 illustrates a communication system 1 applied to the present disclosure.

Referring to FIG. 7, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

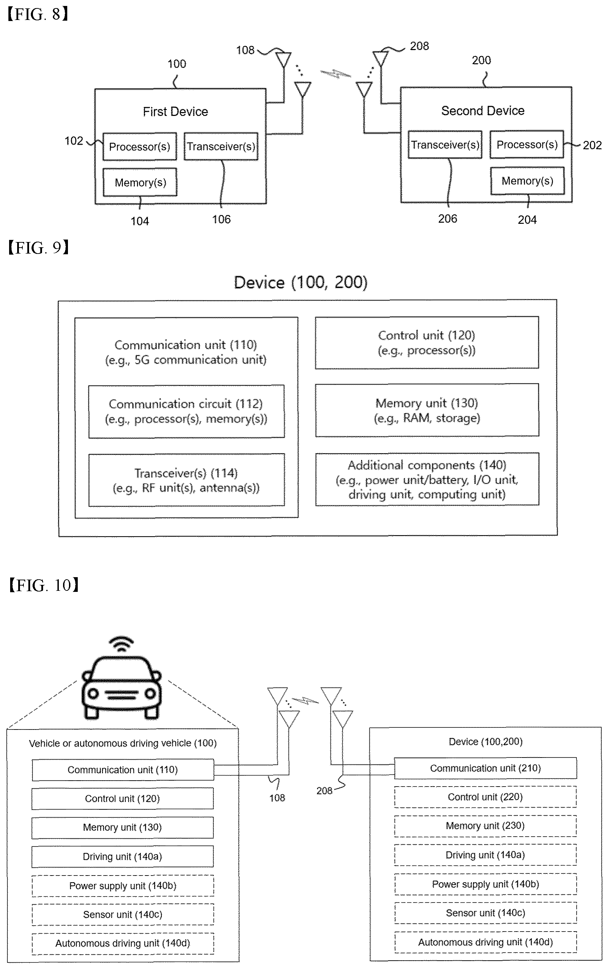

FIG. 8 illustrates wireless devices applicable to the present disclosure.

Referring to FIG. 8, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 7.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 9 illustrates another example of a wireless device applied to the present disclosure. The wireless device may be implemented in various forms according to a use case/service (refer to FIG. 7).

Referring to FIG. 9, wireless devices 100 and 200 may correspond to the wireless devices 100 and 200 of FIG. 8 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 8. For example, the transceiver(s) 114 may include the one or more transceivers 106 and 206 and/or the one or more antennas 108 and 208 of FIG. 8. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 7), the vehicles (100b-1 and 100b-2 of FIG. 7), the XR device (100c of FIG. 7), the hand-held device (100d of FIG. 7), the home appliance (100e of FIG. 7), the IoT device (100f of FIG. 7), a digital broadcasting terminal, a hologram device, a public safety device, an MTC device, a medical device, a FinTech device (or a finance device), a security device, a climate/environment device, the AI server/device (400 of FIG. 7), the BSs (200 of FIG. 7), a network node, or the like. The wireless device may be mobile or fixed according to a use case/service.

In FIG. 9, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 10 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 10, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 9, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1. A method of transmitting and receiving a signal by a user equipment (UE) in a wireless communication system, the method comprising:

   receiving channel state information (CSI) reporting configurations;
   receiving CSI-reference signals (CSI-RSs) on CSI-RS resources based on the CSI reporting configurations; and
   transmitting CSI reports based on measurement results for the CSI-RSs,
   wherein, for the CSI reports, each CSI report includes part 1 CSI and part 2 CSI, and the part 2 CSI includes group 0 CSI, group 1 CSI, and group 2 CSI,
   wherein different priority levels are determined for the group 0 CSI, the group 1 CSI, and the group 2 CSI,
   wherein, from among the CSI reporting configurations, based on a first CSI reporting configuration including sub-configurations corresponding to a first CSI report including sub-reports, omission of part 2 CSI for the first CSI report is performed at a sub-configuration level within the same priority level, and
   wherein, from among the CSI reporting configurations, based on that a second CSI reporting configuration that does not include sub-configurations corresponds to a second CSI report that does not include sub-reports, omission of part 2 CSI for the second CSI report is performed for all information of a particular priority level.

2. The method of claim 1, wherein determination of the priority levels includes determining the group 0 CSI for the CSI reports to have a highest priority level, determining a lower CSI report index to have a higher priority level, and determining the group 1 CSI to have a higher priority level than the group 2 CSI within the same CSI report index.

3. The method of claim 1, wherein one sub-configuration includes one parameter for a power offset value within the first CSI reporting configuration.

4. The method of claim 1, wherein one sub-configuration includes one parameter for a number of antenna ports within the first CSI reporting configuration.

5. A user equipment (UE) for transmitting and receiving a signal in a wireless communication system, the UE comprising:

   at least one transceiver;
   at least one processor; and
   at least one memory operably connected to the at least one processor and storing instructions that, when executed, cause the at least one processor to perform a specific operation,
   wherein the specific operation includes:

      receiving channel state information (CSI) reporting configurations;
      receiving CSI-reference signals (CSI-RSs) on CSI-RS resources based on the CSI reporting configurations; and
      transmitting CSI reports based on measurement results for the CSI-RSs,
      wherein, for the CSI reports, each CSI report includes part 1 CSI and part 2 CSI, and the part 2 CSI includes group 0 CSI, group 1 CSI, and group 2 CSI,
      wherein different priority levels are determined for the group 0 CSI, the group 1 CSI, and the group 2 CSI,
      wherein, from among the CSI reporting configurations, based on a first CSI reporting configuration including sub-configurations corresponding to a first CSI report including sub-reports, omission of part 2 CSI for the first CSI report is performed at a sub-configuration level within the same priority level, and

wherein, from among the CSI reporting configurations, based on that a second CSI reporting configuration that does not include sub-configurations corresponds to a second CSI report that does not include sub-reports, omission of part 2 CSI for the second CSI report is performed for all information of a particular priority level.

6. The UE of claim 5, wherein determination of the priority levels includes determining the group 0 CSI for the CSI reports to have a highest priority level, determining a lower CSI report index to have a higher priority level, and determining the group 1 CSI to have a higher priority level than the group 2 CSI within the same CSI report index.

7. The UE of claim 5, wherein one sub-configuration includes one parameter for a power offset value within the first CSI reporting configuration.

8. The UE of claim 5, wherein one sub-configuration includes one parameter for a number of antenna ports within the first CSI reporting configuration.

9. A device for a user equipment (UE), the device comprising:

at least one processor; and
at least one computer memory operably connected to the at least one processor and configured, when executed, to cause the at least one processor to perform an operation, the operation comprising:

receiving channel state information (CSI) reporting configurations;
receiving CSI-reference signals (CSI-RSs) on CSI-RS resources based on the CSI reporting configurations; and
transmitting CSI reports based on measurement results for the CSI-RSs,
wherein, for the CSI reports, each CSI report includes part 1 CSI and part 2 CSI, and the part 2 CSI includes group 0 CSI, group 1 CSI, and group 2 CSI,
wherein different priority levels are determined for the group 0 CSI, the group 1 CSI, and the group 2 CSI,
wherein, from among the CSI reporting configurations, based on a first CSI reporting configuration including sub-configurations corresponding to a first CSI report including sub-reports, omission of part 2 CSI for the first CSI report is performed at a sub-configuration level within the same priority level, and
wherein, from among the CSI reporting configurations, based on that a second CSI reporting configuration that does not include sub-configurations corresponds to a second CSI report that does not include sub-reports, omission of part 2 CSI for the second CSI report is performed for all information of a particular priority level.

10. A computer-readable nonvolatile storage medium comprising at least one computer program that causes at least one processor to perform an operation, the operation comprising:

receiving channel state information (CSI) reporting configurations;
receiving CSI-reference signals (CSI-RSs) on CSI-RS resources based on the CSI reporting configurations; and
transmitting CSI reports based on measurement results for the CSI-RSs,
wherein, for the CSI reports, each CSI report includes part 1 CSI and part 2 CSI, and the part 2 CSI includes group 0 CSI, group 1 CSI, and group 2 CSI,
wherein different priority levels are determined for the group 0 CSI, the group 1 CSI, and the group 2 CSI,
wherein, from among the CSI reporting configurations, based on a first CSI reporting configuration including sub-configurations corresponding to a first CSI report including sub-reports, omission of part 2 CSI for the first CSI report is performed at a sub-configuration level within the same priority level, and
wherein, from among the CSI reporting configurations, based on that a second CSI reporting configuration that does not include sub-configurations corresponds to a second CSI report that does not include sub-reports, omission of part 2 CSI for the second CSI report is performed for all information of a particular priority level.

【FIG. 1】

【FIG. 2】

【FIG. 3】

【FIG. 4】

【FIG. 5】

Table 5.2.3-1: Priority reporting levels for Part 2 CSI

| |
|---|
| Priority 0:<br><br>For CSI reports 1 to $N_{Rep}$, Group 0 CSI for CSI reports configured as 'typeII-r16' or 'typeII-PortSelection-r16'; Part 2 wideband CSI for CSI reports configured otherwise |
| Priority 1:<br><br>Group 1 CSI for CSI report 1, if configured as 'typeII-r16' or 'typeII-PortSelection-r16'; Part 2 subband CSI of even subbands for CSI report 1, if configured otherwise |
| Priority 2:<br><br>Group 2 CSI for CSI report 1, if configured as 'typeII-r16' or 'typeII-PortSelection-r16'; Part 2 subband CSI of odd subbands for CSI report 1, if configured otherwise |
| Priority 3:<br><br>Group 1 CSI for CSI report 2, if configured as 'typeII-r16' or 'typeII-PortSelection-r16'; Part 2 subband CSI of even subbands for CSI report 2, if configured otherwise |
| Priority 4:<br><br>Group 2 CSI for CSI report 2, if configured as 'typeII-r16' or 'typeII-PortSelection-r16'. Part 2 subband CSI of odd subbands for CSI report 2, if configured otherwise |

•
•
•

| |
|---|
| Priority $2N_{Rep} - 1$:<br><br>Group 1 CSI for CSI report $N_{Rep}$, if configured as 'typeII-r16' or 'typeII-PortSelection-r16'; Part 2 subband CSI of even subbands for CSI report $N_{Rep}$, if configured otherwise |
| Priority $2N_{Rep}$:<br><br>Group 2 CSI for CSI report $N_{Rep}$, if configured as 'typeII-r16' or 'typeII-PortSelection-r16'; Part 2 subband CSI of odd subbands for CSI report $N_{Rep}$, if configured otherwise |

【FIG. 6】

Receive CSI reporting configurations ⌐S401

Receive CSI-RSs on CSI-RS resources based on CSI reporting configurations ⌐S403

Transmit CSI reports based on measurement result for CSI-RSs ⌐S405

【FIG. 7】

【FIG. 8】

First Device 100
108 208
Second Device 200

102 — Processor(s) | Transceiver(s)

Transceiver(s) | Processor(s) — 202

Memory(s)

Memory(s)

104 106

206 204

【FIG. 9】

Device (100, 200)

Communication unit (110)
(e.g., 5G communication unit)

Control unit (120)
(e.g., processor(s))

Communication circuit (112)
(e.g., processor(s), memory(s))

Memory unit (130)
(e.g., RAM, storage)

Transceiver(s) (114)
(e.g., RF unit(s), antenna(s))

Additional components (140)
(e.g., power unit/battery, I/O unit,
driving unit, computing unit)

【FIG. 10】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108 208

Device (100,200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| | International application No. |
|---|---|
| | **PCT/KR2024/002133** |

| | |
|---|---|
| **A.** | **CLASSIFICATION OF SUBJECT MATTER** |
| | **H04B 7/06**(2006.01)i; **H04W 52/02**(2009.01)i; **H04W 72/21**(2023.01)i; **H04W 52/36**(2009.01)i; **H04B 7/08**(2006.01)i |

According to International Patent Classification (IPC) or to both national classification and IPC

| | |
|---|---|
| **B.** | **FIELDS SEARCHED** |

Minimum documentation searched (classification system followed by classification symbols)

H04B 7/06(2006.01); H04B 7/0456(2017.01); H04L 1/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), 그룹(group), 파트(part), 우선순위(priority), 생략 (omission)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| DX<br>DA | 3GPP; TSG RAN; NR; Physical layer procedure for data (Release 17). 3GPP TS 38.214 V17.4.0. 04 January 2023.<br>See sections 5.2-5.2.5. | 1-2,5-6,9-10<br>3-4,7-8 |
| A | KR 10-2022-0046608 A (LG ELECTRONICS INC.) 14 April 2022 (2022-04-14)<br>See claims 1-12. | 1-10 |
| A | KR 10-2022-0048476 A (FRAUNHOFER-GESELLSCHAFT ZUR FÖRDERUNG DER ANGEWANDTEN FORSCHUNG E. V.) 19 April 2022 (2022-04-19)<br>See paragraphs [0150]-[0182]. | 1-10 |
| A | WO 2021-174378 A1 (QUALCOMM INCORPORATED) 10 September 2021 (2021-09-10)<br>See paragraphs [0043]-[0059]. | 1-10 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 May 2024** | **31 May 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/002133** |

**C.    DOCUMENTS CONSIDERED TO BE RELEVANT**

| Category* | Citation of document, with indication, where appropriate, of the relevant passages | Relevant to claim No. |
|---|---|---|
| A | WO 2022-194822 A1 (FRAUNHOFER GESELLSCHAFT ZUR FÖRDERUNG DER ANGEWANDTEN FORSCHUNG E.V.) 22 September 2022 (2022-09-22) See page 18, line 27-page 22, line 8. | 1-10 |

Form PCT/ISA/210 (second sheet) (July 2022)

## INTERNATIONAL SEARCH REPORT
### Information on patent family members

International application No.

**PCT/KR2024/002133**

| Patent document cited in search report | | | Publication date (day/month/year) | Patent family member(s) | | | Publication date (day/month/year) |
|---|---|---|---|---|---|---|---|
| KR | 10-2022-0046608 | A | 14 April 2022 | CN | 114303325 | A | 08 April 2022 |
| | | | | EP | 4016865 | A1 | 22 June 2022 |
| | | | | EP | 4064585 | A1 | 28 September 2022 |
| | | | | JP | 2022-544689 | A | 20 October 2022 |
| | | | | JP | 7352013 | B2 | 27 September 2023 |
| | | | | US | 2022-0303812 | A1 | 22 September 2022 |
| | | | | WO | 2021-029701 | A1 | 18 February 2021 |
| KR | 10-2022-0048476 | A | 19 April 2022 | CN | 114223145 | A | 22 March 2022 |
| | | | | CN | 114270722 | A | 01 April 2022 |
| | | | | EP | 3780455 | A1 | 17 February 2021 |
| | | | | EP | 3780456 | A1 | 17 February 2021 |
| | | | | EP | 4014403 | A1 | 22 June 2022 |
| | | | | EP | 4014403 | B1 | 20 September 2023 |
| | | | | EP | 4018585 | A1 | 29 June 2022 |
| | | | | EP | 4018585 | B1 | 15 November 2023 |
| | | | | EP | 4274109 | A2 | 08 November 2023 |
| | | | | EP | 4274109 | A3 | 17 January 2024 |
| | | | | ES | 2960519 | T3 | 05 March 2024 |
| | | | | JP | 2022-544552 | A | 19 October 2022 |
| | | | | JP | 2022-544664 | A | 20 October 2022 |
| | | | | KR | 10-2022-0048475 | A | 19 April 2022 |
| | | | | US | 11881919 | B2 | 23 January 2024 |
| | | | | US | 11936456 | B2 | 19 March 2024 |
| | | | | US | 2022-0286165 | A1 | 08 September 2022 |
| | | | | US | 2022-0286176 | A1 | 08 September 2022 |
| | | | | WO | 2021-028284 | A1 | 18 February 2021 |
| | | | | WO | 2021-028425 | A1 | 18 February 2021 |
| WO | 2021-174378 | A1 | 10 September 2021 | CN | 115176429 | A | 11 October 2022 |
| | | | | EP | 4115545 | A1 | 11 January 2023 |
| | | | | EP | 4115545 | A4 | 29 November 2023 |
| | | | | US | 2023-0120578 | A1 | 20 April 2023 |
| WO | 2022-194822 | A1 | 22 September 2022 | CN | 117356039 | A | 05 January 2024 |
| | | | | EP | 4309299 | A1 | 24 January 2024 |
| | | | | JP | 2024-516347 | A | 15 April 2024 |
| | | | | KR | 10-2023-0159494 | A | 21 November 2023 |

Form PCT/ISA/210 (patent family annex) (July 2022)